# EUROPEAN PATENT SPECIFICATION

(11) **EP 2 786 075 B1**
(45) Date of publication and mention of the grant of the patent: **27.09.2017**
(21) Application number: 12853101.9
(22) Date of filing: 30.11.2012
(51) Int. Cl.: F24F 1/00, F24F 3/16

(54) **AIR CONDITIONER**
KLIMAANLAGE
CLIMATISEUR

(30) Priority: 02.12.2011 KR 20110128239
(43) Date of publication of application: 08.10.2014
(73) Proprietor: LG Electronics Inc., Seoul 150-721 (KR)
(72) Inventor: LEE, Sunghwa, Seoul 153-802 (KR); JEON, Hooncheol, Seoul 153-802 (KR); JUNG, Yeekyeong, Seoul 153-802 (KR); PARK, Hyungho, Seoul 153-802 (KR)
(74) Representative: Vossius & Partner Patentanwälte Rechtsanwälte mbB
(86) International application number: PCT/KR2012/010334
(87) International publication number: WO 2013/081427

(56) References cited:
- WO-A2-2010/107209
- JP-A- H0 953 835
- JP-A- H11 114 039
- JP-A- 2008 241 201
- JP-Y2- H 064 892
- KR-A- 20100 111 966
- KR-U- 980 018 970
- US-A- 5 957 771
- US-A1- 2004 050 950

## Description

### Technical Field

The present disclosure relate to an air conditioner.

### Background Art

Air conditioners may thermally exchange a refrigerant with an indoor air through compression, condensation, expansion, and evaporation processes. A refrigerant is heat-exchanged with indoor air within a heat exchanger. When the air conditioner performs a heating operation, the refrigerant is condensed while being heat-exchanged with the indoor air. When the air conditioner performs a cooling operation, the refrigerant is evaporated while being heat-exchanged with the indoor air.

The air is heated or cooled by being heat-exchanged within the heat exchanger is discharged into an indoor room to heat and cool the indoor air.

Harmful inserts may live in the indoor space in which the air conditioner or an indoor unit is installed.

In general, a user may directly spread an insect repellent in a spreading method. Alternatively, fumigation equipment may be connected to a power source to evaporate or spread an inset repellent through the fumigation equipment.

In insect eradication techniques according to a related art, an air conditioner includes an insect eradicator which outputs a plurality of sound wave signals. The insect eradicator includes an insect eradicator control unit outputting a plurality of pulse signals an amplification unit amplifying levels of the pulse signals, and an output unit converting the level-amplified pulse signals into a plurality of sound wave signals.

However, in case of the cited invention, if the harmful insects are deeply hidden into places to which the sound wave signals do not reach, it may be difficult to eradicate the harmful insects using the sound waves.

Also, in case of a large indoor space, the sound waves are decreased in intensity at positions far from the insect eradicator. Thus, it may be difficult to eradicate the harmful insects using the sound waves. An air conditioner according to the preamble of claim 1 is known from document JP H09 53835 A.

### Disclosure of Invention

### Technical Problem

Embodiments provide an air conditioner including an insect eradication module.

### Solution to Problem

An air conditioner according to claim 1.

The details of one or more embodiments are set forth in the accompanying drawings and the description below. Other features will be apparent from the description and drawings, and from the claims.

### Advantageous Effects of Invention

According to the proposed embodiments, the simple module may be provided in the air conditioner to effectively eradicate the harmful insects without using separate insect eradicator.

Also, the insect eradication repellent may flow together with the air discharged from the air conditioner and be spread into the indoor space to effectively eradicate the harmful insects.

### Brief Description of Drawings

Fig. 1 is a side cross-sectional view of an air conditioner including an insect eradication module according to an example.
Fig. 2 is a perspective view illustrating an insect eradication module according to an example.
Fig. 3 is a cross-sectional view taken along line A-A of Fig. 2.
Fig. 4 is a cross-sectional view taken along the line B-B of Fig. 2.
Fig. 5 is a perspective view illustrating an insect eradication module according to a first embodiment.
Fig. 6 is a cross-sectional view taken along line C-C of Fig. 5.
Fig. 7 is a perspective view illustrating an insect eradication module according to the second embodiment.

### Mode for the Invention

Reference will now be made in detail to the embodiments of the present disclosure, examples of which are illustrated in the accompanying drawings. The scope of the present disclosure, however, shall not be construed as being limited to embodiments provided herein. Rather, it will be apparent that other embodiments that fall within the scope of the present disclosure may easily be derived through adding, modifying, and deleting elements herein.

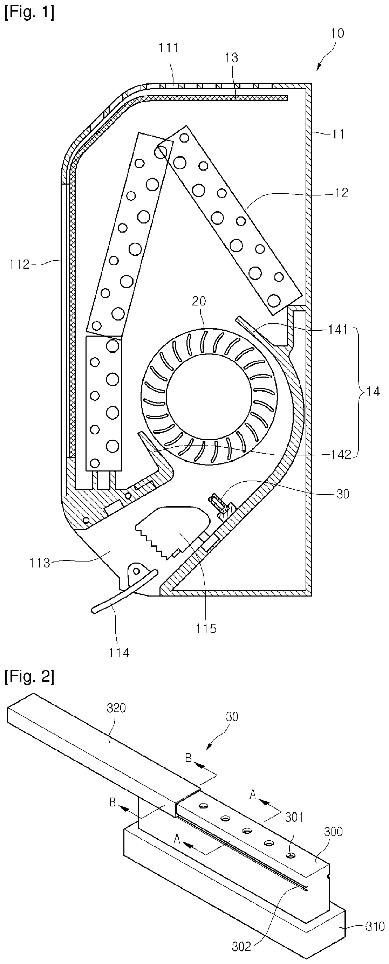

Fig. 1 is a side sectional view of an air conditioner including an insect eradication module according to an example.

Referring to Fig. 1, the air conditioner 10 according to an example includes a main body 11 defining an outer appearance thereof, an indoor heat exchanger 12 disposed in the main body 11, a cross flow fan 20 disposed under the indoor heat exchanger 12 to discharge air passing through the indoor heat exchanger 12 into an indoor room, and an insect eradication module 30 configured to allow air discharged into the indoor room to contain an insect eradication repellent.

In detail, a suction grill 111 is disposed in a side of the main body 11, particularly, a top surface of the main body 11 to define a suction hole, thereby suctioning indoor air into the main body 11. Also, a separate suction hole is defined in a front surface of the main body 11. The suction hole may be selectively opened and closed by a suction panel 112.

Thus, a filter 13 may be mounted on a rear side of the suction hole covered by the suction grill 111 and the suction panel 112 to filter foreign substances contained in the suctioned air.

Also, a flow of air passing through the cross flow fan 20 is guided by a discharge guide 14. In detail, a discharge end of the discharge guide 14 communicates with a discharge hole 113 defined in a lower portion of the main body 11. The air suctioned by the cross flow fan 20 is discharged into the indoor room through the discharge hole 113.

Also, a discharge louver 115 and a discharge vane 114 may mounted in the discharge hole 113. The discharge louver 115 may guide a flow of the discharge air in a horizontal direction, and the discharge vane 114 may guide a flow of the discharge air in vertical direction. Furthermore, the discharge vane 114 may also perform a function of selectively covering the discharge hole 113.

Also, the discharge guide 14 includes a stabilizer 142 disposed spaced from one edge of the cross flow fan 20 and a rear guide 141 disposed spaced from the other edge of the cross flow fan 20. The stabilizer 142 and the rear guide 141 define a flow path through which air flows. The air passing through the indoor heat exchanger 12 and the cross flow fan 20 is guided by the stabilizer 142 and the rear guide 141 to flow into the discharge hole 113.

The insect eradication module 30 is disposed inside the discharge hole 113. The insect eradication module 30 may contain the insect eradication repellent in the air discharged from the discharge hole 113. That is, the insect eradication module 30 supplies the insect eradication repellent into the air flowing within the main body 11.

The insect eradication module 30 may be detachably disposed on the rear guide 141 or the stabilizer 142. Since the rear guide 141 and the stabilizer 142 define the air flow path, it may be understood that the insect eradication module 30 is disposed within the air flow path.

However, the present disclosure is not limited to an installation position of the insect eradication module 30. For example, the insect eradication module 30 may be disposed on an inner surface of the main body 11, instead of the rear guide 141 or the stabilizer 142. Especially, the insect eradication module 30 may be disposed on a side of the discharge hole 113 or the suction hole. In this case, the insect eradication repellent disposed in the insect eradication module 30 may be easily mixed with the air suctioned or discharged to the air conditioner 10.

As described above, since the insect eradication module 30 is disposed inside the main body 11, the insect eradication module 30 or insect eradication repellent contained therein may easily act with the air flowing within the air conditioner 10.

Fig. 2 is a perspective view illustrating an insect eradication module according to an example.

Referring to Fig. 2, an insect eradication module 30 includes a storage member 300 for storing an insect eradication repellent, a fixing member 310 for fixing the storage member 300 to the main body 11, and a switching member 320 linearly moved along a length direction of the storage member 300 to open and close the storage member 300.

At least one insect eradication repellent discharge hole 301 may be defined in the storage member 300 to discharge the insect eradication repellent into flowing air. The insect eradication repellent discharge hole 301 may be provided in plurality. The plurality of the insect eradication repellent discharge holes 301 are spaced apart from each other along the moving direction of the switching member 320. The plurality of insect eradication repellent discharge holes 301 may be spaced a predetermined distance from each other.

The insect eradication repellent may be a vegetable oil or compound as an insect repellent agent. Also, the insect eradication repellent may be formed of a component which is evaporated when in contact with air. The insect eradication repellent may be discharged together with the air flowing within the air conditioner 10 to the outside through the insect eradication repellent discharge hole 301.

The insect eradication repellent discharge hole 301 may be opened and closed by the switching member 320. A guide groove 302 is defined in the storage member 300 to guide the moving of the switching member 320. The guide groove 302 may be defined in plurality at both side surfaces of the storage member 300.

The switching member 320 has at least one portion, e.g., one end and the other end which are inserted into the guide groove 302. The switching member 320 may be linearly moved along the guide groove 302. When the switching member 320 is linearly moved, at least one insect eradication repellent discharge hole 301 of the plurality of the insect eradication repellent discharge holes 301 may be selectively opened or closed.

In a case where the insect eradication repellent discharge hole 301 is provided in plurality, the switching member 320 adjusts the number of insect eradication repellent discharge holes 301 to control an amount of insect eradication repellent to be discharged into the air.

The switching member 320 may be manually adjusted in moving position. However, although not shown, a separate driving part may be driven to move the position of the switching member 320. The driving part may include a motor or an actuator.

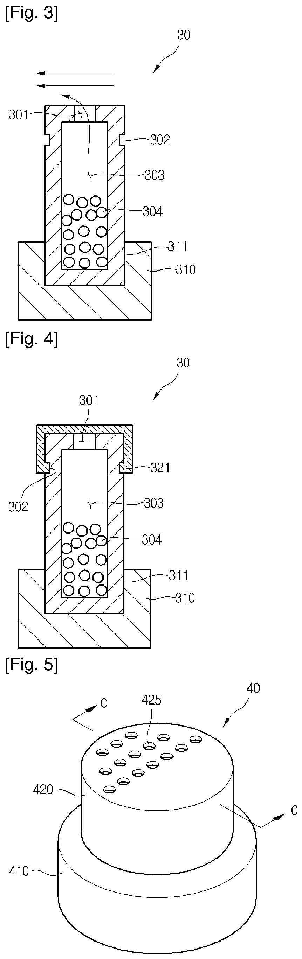

The fixing member 310 is installed on an inner surface of the rear guide 141, the stabilizer 142, or the main body 11. A receiving groove (see reference numeral 311 of Fig. 3) is defined in the fixing member 310 to receive at least one portion of the storage member 300. The storage member 300 may be fixed within the air conditioner 10 in the state where the storage member 300 is inserted in the receiving grove 311.

Fig. 3 is a cross-sectional view taken along line A-A of Fig. 2.

Referring to Fig. 3, a storage space 303 is defined in the storage member 300 to store the insect eradication repellent. The insect eradication repellent may be stored in the storage space 303 in a liquid or solid state.

Also, a moisture absorption member 304 is disposed in the storage space 303. The moisture absorption member 304 may be a member for absorbing and storing moisture such as a moisture absorption paper, a sponge, a felt, and the like. The insect eradication repellent is absorbed into the moisture absorption member 304 and stored in the storage space 303. Then, when the insect eradication repellent contacts air, the insect eradication repellent is evaporated and discharged through the insect eradication repellent discharge hole 301.

The insect eradication repellent discharge hole 301 passes through a top surface of the storage member 300 and is disposed adjacent to the flowing air.

When the fluid is increased in velocity while flowing, the fluid is decreased in flowing pressure. That is, the flowing air has a pressure less than that of static air.

Although air inside the main body 11, especially, air outside the insect eradication module 30 flows toward the discharge hole 113, air within the storage space 303 is in a static state. Thus, since the air within the storage space 303 has a pressure greater than that of the air flowing above the insect eradication repellent discharge hole 301, the air within the storage space 303 is discharged together with the insect eradication repellent through the insect eradication repellent discharge hole 301 and then is discharged through the discharge hole 113.

Fig. 4 is a cross-sectional view taken along the line B-B of Fig. 2.

Referring to Fig. 4, a portion of the insect eradication repellent discharge hole 301 may be covered by the switching member 320. When at least one portion of the insect eradication repellent discharge hole 301 is covered by the switching member 320, the discharge of the air within the storage space 303 or the insect eradication repellent through the covered insect eradication repellent discharge hold 301 may be restricted.

A guide part 321 corresponding to the guide groove 302 is defined in the switching member 320. An end of the switching member 320 may be bent toward the guide groove 302 to manufacture the guide part 321. Alternatively, an inner surface of the switching member 320 may protrude toward the guide groove 302 to manufacture the guide part 321.

The guide part 321 is coupled to the guide groove 302. Also, when the guide part 321 is moved along the guide groove 302, the switching member 320 is slid with respect to the storage member 300 to open and close the insect eradication repellent discharge hole 301. Here, an opened/closed degree of the insect eradication repellent discharge hole 301 may be determined according to the movement distance of the switching member 320.

Hereinafter, descriptions will be made according to a first embodiment. Since the current embodiment is the same as the example except for a structure of an insect eradiation module, different parts between the example and first embodiment will be described principally, and descriptions of the same parts will be denoted by the same reference numerals and the descriptions of the example.

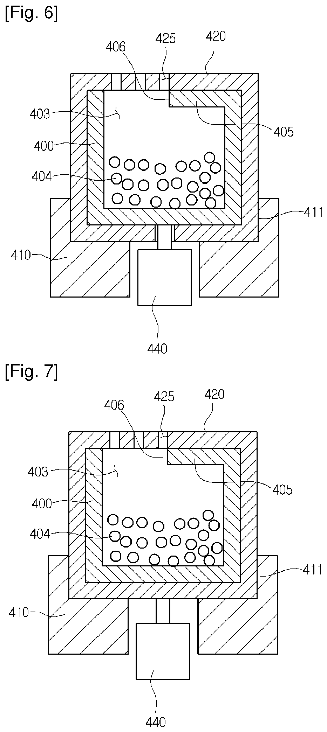

Fig. 5 is a perspective view illustrating an insect eradication module according to a first -embodiment, and Fig. 6 is a cross-sectional view taken along line C-C of Fig. 5.

Referring to Figs. 5 and 6, an insect eradication module 40 according to a first embodiment includes a storage member 400 having a storage space 403 for storing an insect eradication repellent and having an approximately cylindrical shape, a switching member 420 selectively opening the storage member 400, and a fixing member 410 for installing the storage member 400 and the switching member 420 within an air conditioner.

A moisture absorption member 404 is disposed in the storage space 403.

The switching member 420 may have an approximately cylindrical shape corresponding to an outer appearance of the storage member 400. Also, the switching member 420 may be disposed to surround the storage member 400. For example, the switching member 420 may be disposed to cover side and top surfaces of the storage member 400. In other word, the storage member 400 may be received into the switching member 420.

Also, an outer surface of the storage member 400 may contact an inner surface of the switching member 420. Alternatively, the outer surface of the storage member 400 be spaced a preset distance from the inner surface of the switching member 420 in the inner direction of the switching member 420.

At least one insect eradication repellent discharge hole 425 for discharging an insect eradication repellent is defined in the switching member 420. The insect eradication repellent discharge hole 425 may be defined in at least one portion of a top surface of the switching member 420. For example, the insect eradication repellent discharge hole 425 may be defined only in a first semicircle surface of the top surface of the switching member 420 having a circular shape. However, the insect eradication repellent discharge hole 425 may not be defined in a second semicircle surface except the first semicircle surface.

A receiving groove 411 having a shape corresponding to that of an outer surface of the switching member 420 is defined in the fixing member 410. The switching member 420 may be inserted into the receiving groove 411 and fixed within the air conditioner.

In addition, the storage member 400 may be ratably disposed with respect to a vertical shaft (with respect to FIG. 6).

The top surface of the storage member 400 includes a shield part 405 shielding an inner storage space 403 of the storage member 400 and an opening 406 opening the other portion except the shield part 405.

That is, at least one portion of the top surface of the storage member 400 is opened. In detail, the shield part 405 may contact the inside of a top surface of the switching member 420. Alternatively, the shield 405 may be spaced a predetermined distance downward from the inside of the top surface of the switching member 420. The shield part 405 is disposed in only a portion of a top surface of the storage member 400. Also, the opening 406 may be defined in a position at which the insect eradication repellent discharge hole 425 is defined.

The insect eradication repellent stored in the storage member 400 may be discharged to the outside of the storage member 400 through the opening 406. Also, the insect eradication repellent is discharged to outside of the insect eradication module 40 through the insect eradication repellent discharge hole 425.

A motor 440 serving as a driving part may be connected to a side of the storage member 400. The motor 440 provides a rotation power into the storage member 400. To adjust an amount of discharged insect eradication repellent to be discharged through the insect eradication repellent discharge hole 425, the motor 440 may be controlled in rotation direction or number.

When the motor 440 is rotated to locate the storage member 400 at a first position, the opening 406 may be disposed at a position corresponding to that of the insect eradication repellent discharge hole 425. In this case, the insect eradication repellent is discharged through the opening 406 and the insect eradication repellent discharge hole 425.

However, when the motor 440 is rotated to locate the storage member 400 at a second position, the shield part 405 may shield the insect eradication repellent discharge hole 425. In this case, the discharge of the insect eradication repellent may be restricted.

An operation of the air conditioner 10 according to the current embodiment will be described.

When the shield part 405 is disposed at a position corresponding to that of the insect eradication repellent discharge hole 425 while the storage member 400 is rotated, the insect eradication repellent hole 425 is shielded by the shield part 405. Thus, the insect eradication repellent is not discharged to the outside.

On the other hand, when the shield part 405 is disposed at a position corresponding to that of the insect eradication repellent discharge hole 425 while the storage member 400 is rotated, the opening communicates with the insect eradication repellent hold 425. Thus, the insect eradication repellent may be discharged to the outside.

When a corresponding area of the opening 406 and the insect eradication repellent hole 425, i.e., the communicating area of the opening 406 and the insert eradication repellent hole 425 is increased, an amount of insect eradication repellent discharged through the insect eradication repellent hole 425 is increased. Therefore, the storage member 400 may be rotated at a predetermined position to control an amount of insect eradication repellent to be discharged through the insect eradication repellent discharge hole 425.

For example, when a user inputs a predetermined command on the basis of the discharged amount of insect eradication repellent, the motor 440 may be controlled in rotation direction or number to control an opened degree of the insect eradication repellent discharge hole 425.

According to the current embodiment, the air mixed with the insect eradication repellent may be discharged through the discharge hole to eradicate insects within indoor room. Also, the insect eradication repellent may flow together with the air discharged from the air conditioner and then be widely spread into the indoor room.

Also, an amount of insect eradication repellent discharged from the insect eradication module may be adjusted by the user.

Fig. 7 is a perspective view illustrating an insect eradication module according to a second embodiment.

Referring to Fig. 7, a motor 440 according to a second embodiment may be connected to the switching member 420. That is, a storage member 400 is fixed, and the switching member 420 may be rotatably disposed.

The switching member 420 may be rotated according to driving of the motor 440. Also, an opened degree of an insect eradication repellent discharge hole 425 may be controlled according to a rotation angle of the switching member 420. As a result, the mount of insect eradication repellent discharged from the insect eradication module 40 may be easily adjusted.

### Industrial Applicability

According to the embodiments, since the simple module may be provided in the air conditioner to effectively eradicate the harmful insects without using a separate insect eradicator. Thus, industrial applicability may be significantly high.

## Claims

1. An air conditioner comprising:
a suction hole suctioning indoor air;
a heat exchanger (12) disposed on a side of the suction hole;
a discharge hole (113) discharging air heat-exchanged in the heat exchanger; and
an insect eradication module (30) supplying an insect eradication repellent into the indoor air discharged through the discharge hole,
wherein the insect eradication module (30) comprises: a storage member (400) storing the insect eradication repellent; and
a switching member (420) disposed on a side of the storage member to selectively open and close the storage member,
**characterized in that**:
the switching member is disposed to surround the outer of the storage member and comprises at least one insect eradication repellent discharge hole (425) to discharge the insect eradication repellent into the indoor air, one surface of the storage member comprises:
an opening (406) communicating with the insect eradication repellent discharge hole and a shield part (405) shielding the insect eradication repellent discharge hole, and
the switching member or the storage member rotates to open the at least one insect eradication repellent discharge hole (425).

2. The air conditioner according to claim 1, further comprising:
a driving part connected to the switching member or the storage member to rotate the switching member or the storage member.

3. The air conditioner according to claim 2, wherein, when the driving part is driven to locate the storage member at a first position, the opening is disposed at a position corresponding to that of the insect eradication repellent discharge hole, and the insect eradication repellent is discharged through the opening and the insect eradication repellent discharge hole.

4. The air conditioner according to claim 3, wherein, when the driving part is driven to locate the storage member at the second position, the shield part shields the insect eradication repellent discharge hole.

5. The air conditioner according to claim 1, wherein the insect eradication module is disposed inside the suction hole or the discharge hole.

## Patentansprüche

1. Klimaanlage mit:
einem Ansaugloch zum Ansaugen von Raumluft;
einem an einer Seite des Ansauglochs angebrachten Wärmetauscher (12);
einem Auslassloch (113) zum Auslassen von in dem Wärmetauscher wärmegetauschter Luft; und
einem Insektenbekämpfungsmodul (30) zum Zuführen eines Insektenbekämpfungsmittels in die durch das Auslassloch ausgelassene Raumluft,
wobei das Insektenbekämpfungsmodul (30) umfasst:
ein Speicherelement (400) zum Speichern des Insektenbekämpfungsmittels; und
ein auf einer Seite des Speicherelements angeordnetes Schaltelement (420) zum gezielten Öffnen und Schliessen des Speicherelements,
**dadurch gekennzeichnet, dass**
das Schaltelement so angeordnet ist, dass es das Äußere des Speicherelements umgibt, und wenigstens ein Insektenbekämpfungsmittel-Auslassloch (425) zum Auslassen des Insektenbekämpfungsmittels in die Raumluft aufweist, wobei eine Oberfläche des Speicherelements umfasst:
eine Öffnung (406), die in Verbindung mit dem Insektenbekämpfungsmittel-Auslassloch steht, und ein Abdeckteil (405) zum Abdecken des Insektenbekämpfungsmittel-Auslassloches, und wobei sich das Schaltelement oder das Speicherelement dreht, um das wenigstens eine Insektenbekämpfungsmittel-Auslassloch (425) zu öffnen.

2. Klimaanlage nach Anspruch 1, ferner mit:
einem mit dem Schaltelement oder Speicherelement verbundenen Antriebsteil zum Drehen des Schaltelements oder Speicherelements.

3. Klimaanlage nach Anspruch 2, wobei, wenn das Antriebsteil angetrieben wird, um das Speicherelement an einer ersten Position zu positionieren, die Öffnung an einer Position angeordnet ist, die der des Insektenbekämpfungsmittel-Auslassloches entspricht, und das Insektenbekämpfungsmittel durch die Öffnung und das Insektenbekämpfungsmittel-Auslassloch abgegeben wird.

4. Klimaanlage nach Anspruch 3, wobei, wenn das Antriebsteil angetrieben wird, um das Speicherelement an der zweiten Position zu positionieren, das Abdeckteil das Insektenbekämpfungsmittel-Auslassloch abdeckt.

5. Klimaanlage nach Anspruch 1, wobei das Insektenbekämpfungsmodul innerhalb des Ansauglochs oder des Auslasslochs angeordnet ist.

## Revendications

1. Climatiseur comprenant :
un orifice d'aspiration aspirant de l'air intérieur ;
un échangeur de chaleur (12) disposé sur un côté de l'orifice d'aspiration ;
un orifice d'échappement (113) évacuant l'air soumis à échange thermique dans l'échangeur de chaleur ; et
un module d'éradication d'insectes (30) refoulant un insectifuge dans l'air intérieur évacué par l'orifice d'échappement,
où le module d'éradication d'insectes (30) comprend : un élément de stockage (400) stockant l'insectifuge ; et
un élément de commutation (420) disposé sur un côté de l'élément de stockage pour ouvrir et fermer sélectivement l'élément de stockage,
**caractérisé en ce que** :
l'élément de commutation est disposé de manière à entourer l'extérieur de l'élément de stockage et présente au moins un orifice d'échappement d'insectifuge (425) pour évacuer l'insectifuge vers l'air intérieur, une surface de l'élément de stockage présentant :
une ouverture (406) communiquant avec l'orifice d'échappement d'insectifuge et une pièce de protection (405) protégeant l'orifice d'échappement d'insectifuge, et l'élément de commutation ou l'élément de stockage tournant pour ouvrir ledit au moins un orifice d'échappement d'insectifuge (425).

2. Climatiseur selon la revendication 1, comprenant en outre :
une pièce d'entraînement reliée à l'élément de commutation ou à l'élément de stockage pour faire tourner l'élément de commutation ou l'élément de stockage.

3. Climatiseur selon la revendication 2, où, quand la pièce d'entraînement est actionnée pour placer l'élément de stockage dans une première position, l'ouverture est disposée dans une position correspondant à celle de l'orifice d'échappement d'insectifuge, et l'insectifuge est évacué par l'ouverture et l'orifice d'échappement d'insectifuge.

4. Climatiseur selon la revendication 3, où, quand la pièce d'entraînement est actionnée pour placer l'élément de stockage dans la deuxième position, la pièce de protection protège l'orifice d'échappement d'insectifuge.

5. Climatiseur selon la revendication 1, où le module d'éradication d'insectes est disposé à l'intérieur de l'orifice d'aspiration ou de l'orifice d'échappement.
